# EUROPEAN PATENT SPECIFICATION

(11) **EP 4 187 660 B1**
(45) Date of publication and mention of the grant of the patent: **24.12.2025**
(21) Application number: 21936237.3
(22) Date of filing: 29.09.2021
(51) Int. Cl.: H01M 50/342, H01M 50/375

(54) **PRESSURE RELIEF MECHANISM, BATTERY CELL, BATTERY, ELECTRICAL DEVICE AND MANUFACTURING METHOD THEREFOR**
DRUCKENTLASTUNGSMECHANISMUS, BATTERIEZELLE, BATTERIE, ELEKTRISCHE VORRICHTUNG UND HERSTELLUNGSVERFAHREN DAFÜR
MÉCANISME DE DÉCHARGE DE PRESSION, ÉLÉMENT DE BATTERIE, BATTERIE, DISPOSITIF ÉLECTRIQUE ET SON PROCÉDÉ DE FABRICATION

(43) Date of publication of application: 31.05.2023
(73) Proprietor: Contemporary Amperex Technology (Hong Kong) Limited, Central, Central And Western District (HK)
(72) Inventor: HUANG, Shoujun, Ningde City, Fujian 352100 (CN); WANG, Peng, Ningde City, Fujian 352100 (CN); ZHENG, Yulian, Ningde City, Fujian 352100 (CN); ZHANG, Xiaoping, Ningde City, Fujian 352100 (CN); LIU, Yanyu, Ningde City, Fujian 352100 (CN); CHEN, Xinxiang, Ningde City, Fujian 352100 (CN)
(74) Representative: Lorenz Seidler Gossel Part. mbB
(86) International application number: PCT/CN2021/121966
(87) International publication number: WO 2023/050239

(56) References cited:
- CN-A- 108 847 500
- CN-A- 112 713 345
- CN-U- 201 853 755
- CN-U- 205 069 727
- CN-U- 205 828 453
- CN-U- 209 526 124
- JP-A- 2007 141 518

## Description

### TECHNICAL FIELD

This application relates to the field of batteries, and in particular, to a pressure relief mechanism, a battery cell, a battery, an electric apparatus, and a manufacturing method thereof.

### BACKGROUND

For example, in cases of overcharging, piercing an electrode plate by a metal conductor, hot box testing, and the like, heat and gas are rapidly accumulated inside a battery to cause an increase in an internal air pressure and even cause swelling and explosion of the battery in severe cases.

Therefore, batteries are generally provided with a pressure relief mechanism, and when an air pressure or temperature inside a battery is increased to some extent, the pressure relief mechanism is opened in a timely manner for internal gas to be released through the pressure relief mechanism to prevent the battery from exploding. In the prior art, even if a battery is in a normal working state, and air pressure inside the battery is less than designed actuation pressure of a pressure relief mechanism, the pressure relief mechanism sometimes still fails, which reduces service life of the pressure relief mechanism and affects safety performance of the battery.

A pressure relief mechanism for a battery is known from each of CN 108 847 500 A, CN 205 069 727 U and CN 201 853 755 U. The mechanism disclosed therein is characterized by a circular body, a tapered slope section and a convex segment. A groove is formed in the connection portion between the slope section and the convex segment.

### SUMMARY

Embodiments of this application provide a battery cell, a battery, an electric apparatus, and a manufacturing method of pressure relief mechanism, which can prevent the pressure relief mechanism from failing under a low air pressure, thereby ensuring service life of the pressure relief mechanism and improving safety performance of the battery.

According to a first aspect, a battery cell comprising a pressure relief mechanism provided on a housing plate of the battery cell is suggested, wherein the pressure relief mechanism includes: a connecting portion, where the connecting portion is located at an outer peripheral region of the pressure relief mechanism and is configured to connect to the housing plate; a first part, where one end of the first part is connected to the connecting portion, and the other end protrudes obliquely toward an interior of the battery cell; a weak portion, where the weak portion is provided at the protruding end of the first part; and a second part, where an outer edge region of the second part is connected to the weak portion, and the outer edge region extends obliquely in a direction leaving the interior of the battery cell; where when an air pressure inside the battery cell is less than a first preset value, the weak portion is pressed by the first part and/or the second part; wherein a thickness of the first part is less than a thickness of the second part and/or the first part is provided with a thin-walled region.

In the pressure relief mechanism in this embodiment of this application, under an action of the air pressure inside the battery cell, the first part protruding obliquely toward the interior of the battery cell and the second part having the outer edge region extending obliquely in the direction leaving the interior of the battery cell move away from the interior of the battery cell, or tend to move away from the interior of the battery cell. Therefore, when an air pressure or a temperature inside the battery cell is relatively low and is specifically less than the first preset value, a contour of the pressure relief mechanism inside of the battery cell tends to have a reduced circumference and shrink toward a center of the pressure relief mechanism, and the weak portion is pressed by the first part and/or the second part to inhibit cracking of the weak portion and prevent creeping failure of the pressure relief mechanism under a low air pressure, thereby effectively prolonging service life of the pressure relief mechanism.

In some embodiments, when the air pressure inside the battery cell is greater than or equal to the first preset value, the first part changes from a state of protruding toward the interior of the battery cell to a state of protruding away from the interior of the battery cell, and the weak portion is stretched by the first part and/or the second part to promote the cracking of the weak portion, thereby achieving rapid pressure relief and effectively preventing the battery from exploding.

In some embodiments, the second part has a shape of protruding away from the interior of the battery cell. Under an action of the air pressure inside the battery cell, the second part of this shape moves slightly away from the interior of the battery cell to effectively support the first part.

In some embodiments, the second part includes an outer edge region and a middle region, and the middle region is basically parallel to a portion of the housing plate on which the pressure relief mechanism is provided. Because the middle region of the second part is basically parallel to a position of the housing plate on which the pressure relief mechanism is provided, the second part does not deform extremely severely, so that the second part is not likely to crack, thereby reducing a risk of actuation at a position outside the weak portion.

In some embodiments, a protruding height of the second part in a direction leaving the interior of the battery cell does not exceed a height of the connecting portion. If the protruding height of the second part in a direction leaving the interior of the battery cell is excessively high, the volume of the battery cell is increased, causing a decrease in volumetric energy density.

According to one option of the first aspect, the thickness of the first part is less than a thickness of the second part. Because the second part is relatively thicker and the first part is relatively thinner, when the air pressure or temperature inside the battery cell rises to be greater than or equal to the first preset value, the first part is more easily and quickly to change to a state of protruding away from the interior of the battery cell and deform greatly to better stretch the weak portion to promote the cracking of the weak portion, thereby achieving rapid pressure relief and preventing the battery from exploding.

In some embodiments, when the temperature or air pressure inside the battery cell is greater than or equal to a second preset value, the weak portion is actuated, so that the pressure inside the battery cell is relieved via the pressure relief mechanism. That is, the second preset value is a burst pressure or temperature of the pressure relief mechanism, and when the temperature or air pressure inside the battery cell is greater than or equal to the second preset value, the weak portion is actuated to implement a pressure relief function.

According to another option of the first aspect, the first part is provided with a thin-walled region. With the thin-walled region provided, the first part is more likely to deform under the action of the air pressure. When the pressure relief mechanism has a relatively small size, making it not easy to prepare the entire first part thin enough, the thin-walled region is provided for easily implementing deformation of the first part, thereby facilitating actuation of the weak portion.

In some embodiments, the second part includes at least one first protrusion region that protrudes toward the interior of the battery cell and at least two second protrusion regions that protrude away from the interior of the battery cell. The second part has an undulating wave shape to increase strength of the entire second part and improve a pressing effect of the first part and/or the second part on the weak portion, thereby inhibiting cracking of the weak portion and prolonging service life of the pressure relief mechanism.

In some embodiments, the connecting portion is annular and includes two straight portions and two arc-shaped portions connected to ends of the two straight portions respectively. That is, a contour of the pressure relief mechanism is of a racetrack shape, which can implement a larger degassing area, thereby facilitating pressure relief.

In some embodiments, at least a partial region of the weak portion has a thickness less than thicknesses of the first part and the second part. That is, a thickness of a part of the weak portion is not reduced, and therefore, when the weak portion is actuated, the second part does not fly out along with emissions such as airflow.

In some embodiments, the weak portion is a groove. This groove structure may be formed by stamping and is easy to manufacture.

According to a second aspect, this application provides a battery cell, including the pressure relief mechanism according to the first aspect.

According to a third aspect, this application provides a battery, including the battery cell according to the second aspect.

According to a fourth aspect, this application provides an electric apparatus, including the battery according to the third aspect, where the battery is configured to supply electrical energy.

According to a fifth aspect, a manufacturing method of pressure relief mechanism is provided and includes: providing a connecting portion at an outer peripheral region of the pressure relief mechanism, where the connecting portion is configured to connect to the housing plate; providing a first part, where one end of the first part is connected to the connecting portion, and the other end protrudes obliquely toward an interior of a battery cell; providing a weak portion, where the weak portion is connected to the protruding end of the first part; and providing a second part, where an outer edge region of the second part is connected to the weak portion, so that the outer edge region extends obliquely in a direction leaving the interior of the battery cell; where when an air pressure inside the battery cell is less than a first preset value, the weak portion is pressed by the first part and/or the second part.

The foregoing description is merely an overview of the technical solutions in this application. In order to better understand the technical means in this application, to achieve implementation according to content of this specification, and to make the foregoing and other objects, features and advantages in this application more obvious and easier to understand, the following describes specific embodiments of this application.

### BRIEF DESCRIPTION OF DRAWINGS

A person of ordinary skill in the art can clearly understand various other advantages and benefits by reading the detailed description of the preferred embodiments below. The accompanying drawings are merely intended to illustrate the objectives of the preferred embodiments and are not intended to limit this application. In addition, in all the accompanying drawings, same parts are indicated by same reference signs. In the accompanying drawings:
FIG. 1 is a schematic structural diagram of a vehicle according to some embodiments of this application;
FIG. 2 is a schematic structural diagram of a battery according to some embodiments of this application;
FIG. 3 is an exploded view of a battery cell according to some embodiments of this application;
FIG. 4 is a top view of an end cover according to some embodiments of this application;
FIG. 5 is a cross-sectional view of FIG. 4 along a line a-a;
FIG. 6 is a three-dimensional diagram of a pressure relief mechanism according to some embodiments of this application;
FIG. 7 is a view of the pressure relief mechanism in FIG. 6;
FIG. 8 is a cross-sectional view of FIG. 7 along a line b-b;
FIG. 9 is an enlarged view of region X1 in FIG. 8;
FIG. 10 is a three-dimensional diagram of a pressure relief mechanism when an air pressure or a temperature inside a battery cell is less than a first preset value;
FIG. 11 is a cross-sectional view of a pressure relief mechanism;
FIG. 12 is an enlarged view of region X2 in FIG. 11;
FIG. 13 is a three-dimensional diagram when an air pressure or a temperature inside a battery cell rises to be greater than or equal to a first preset value, and a second part changes to an upward protruding state;
FIG. 14 is a cross-sectional view of a pressure relief mechanism;
FIG. 15 is an enlarged view of region X3 in FIG. 14;
FIG. 16 is a three-dimensional diagram when an air pressure or a temperature inside a battery cell rises to be greater than or equal to a second preset value, and a pressure relief mechanism is about to break;
FIG. 17 is a cross-sectional view of a pressure relief mechanism;
FIG. 18 is an enlarged view of region X4 in FIG. 17;
FIG. 19 is an enlarged view of a part corresponding to region X1 in a pressure relief mechanism according to some embodiments of this application, showing a variant of the pressure relief mechanism;
FIG. 20 shows an initial state of a pressure relief mechanism in the prior art;
FIG. 21 is an enlarged view of region X5 in FIG. 20;
FIG. 22 shows a state of a pressure relief mechanism in the prior art under a lower air pressure;
FIG. 23 is an enlarged view of region X6 in FIG. 22;
FIG. 24 shows a cracked state of a pressure relief mechanism in the prior art;
FIG. 25 is an enlarged view of region X7 in FIG. 24;
FIG. 26 is a partially enlarged view of a pressure relief mechanism according to another embodiment of this application;
FIG. 27 is a three-dimensional diagram of a pressure relief mechanism according to some other embodiments of this application;
FIG. 28 is a view of the pressure relief mechanism in FIG. 27;
FIG. 29 is a cross-sectional view of a pressure relief mechanism; and
FIG. 30 is a schematic flowchart of a manufacturing method of pressure relief mechanism according to some embodiments of this application.

Reference signs in the specific examples are as follows:
battery cell 1;
end cover 10, housing 20, electrode terminal 30, electrode assembly 40, body portion 41, tabs 42, positive electrode tab 421, negative electrode tab 422, housing plate 50, connecting member 60;
pressure relief mechanism 100, connecting portion 101, first part 102, weak portion 103, second part 104;
thin-walled region 1023, first protrusion region 1041, second protrusion region 1042, bending portion 1043; and
straight portion 1011, arc-shaped portion 1012; and
in comparative examples: pressure relief mechanism 200, connecting portion 201, first part 202, weak portion 203, second part 204;
controller 300, motor 400, battery 500;
box body 600, first housing 601, second housing 602; and
vehicle 800.

### DESCRIPTION OF EMBODIMENTS

The following describes in detail the embodiments of technical solutions in this application with reference to the accompanying drawings. The following embodiments are merely used to describe the technical solutions in this application more clearly, and therefore they are merely used as examples and cannot constitute a limitation to the protection scope of this application.

Unless otherwise defined, all technical and scientific terms used in this application shall have the same meanings as commonly understood by a person skilled in the art to which this application belongs. The terms used in this specification of this application are merely intended to describe the specific embodiments but not intended to constitute any limitation on this application. The terms "include", "comprise", "have", and any variations thereof in this specification, the claims and the foregoing description of drawings of this application are intended to cover non-exclusive inclusions. In the specification, claims, or accompanying drawings of this application, the terms "first", "second", and the like are intended to distinguish between different objects but do not indicate a particular order or a subordinate relationship.

An "embodiment" mentioned in this application means that specified features, structures, or characteristics described with reference to this embodiment may be included in at least one embodiment of this application. The word "embodiment" in various positions in this specification does not necessarily refer to a same embodiment, or an independent or alternative embodiment mutually exclusive with other embodiments. A person skilled in the art can clearly and implicitly understand that the embodiments described in this application can be combined with other embodiments.

In the descriptions of this application, it should be noted that unless otherwise specified and defined explicitly, the terms "installment", "link", "connection", and "attachment" should be understood in their general senses. For example, the terms may be a fixed connection, a detachable connection, or an integrated connection, or may be a direct connection, an indirect connection through an intermediate medium, or an internal connection between two elements. A person of ordinary skills in the art can understand specific meanings of these terms in this application based on specific situations.

The term "and/or" in this application describes only an association relationship for describing associated objects and represents that three relationships may exist. For example, A and/or B may represent the following three cases: A alone, both A and B, and B alone. In addition, the character "/" in this application generally indicates an "or" relationship between the associated objects.

In this application, "a plurality of" means more than two (including two). Similarly, "a plurality of groups" means more than two groups (including two groups), and "a plurality of pieces" means more than two pieces (including two pieces).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, or rectangular, or have another shape. This is not limited in the embodiments of this application. The battery cells are usually categorized into three types depending on their packaging: cylinder battery cell, prismatic battery cell, and pouch battery cell. This is also not limited in the embodiments of this application.

The battery mentioned in the embodiments of this application is a single physical module that includes one or more battery cells for providing a higher voltage and capacity. For example, the battery mentioned in this application may include a battery module, a battery pack, or the like. Generally, a battery includes a box body configured to package one or more battery cells. The box body can prevent a liquid or another foreign matter from affecting charging or discharging of the battery cell.

The battery cell includes an electrode assembly and an electrolyte. The electrode assembly includes a positive electrode plate, a negative electrode plate, and a separator. The battery cell functions mainly relying on migration of metal ions between the positive electrode plate and the negative electrode plate. The positive electrode plate includes a positive electrode current collector and a positive electrode active substance layer. The positive electrode active substance layer is applied on a surface of the positive electrode current collector. A current collector uncoated with the positive electrode active substance layer bulges out of a current collector coated with the positive electrode active substance layer, and the current collector uncoated with the positive electrode active substance layer is used as a positive electrode tab. A lithium-ion battery is used as an example. A positive electrode current collector may be made of aluminum and a positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A current collector uncoated with the negative electrode active substance layer bulges out of a current collector coated with the negative electrode active substance layer, and the current collector uncoated with the negative electrode active substance layer is used as a negative electrode tab. The negative electrode current collector may be made of copper, and a negative electrode active substance may be carbon, silicon, or the like. To allow a large current to pass through without fusing, a plurality of positive electrode tabs are provided and stacked together, and a plurality of negative electrode tabs are provided and stacked together. The separator may be made of PP, PE, or the like. In addition, the electrode assembly may have a wound structure or a laminated structure. The embodiments of this application are not limited thereto.

The development of battery technologies relates to many design factors, for example, performance parameters such as energy density, cycle life, discharge capacity, and charge/discharge rate. Safety of batteries also needs to be considered.

For a battery cell, main safety hazards are in the charging and discharging processes. In addition, a suitable ambient temperature also needs to be designed. To effectively avoid unnecessary losses, triple protection measures are usually provided for battery cells. Specifically, the protection measures at least include a switch component, selection of an appropriate separator material, and a pressure relief mechanism. The switch component is a component which enables a battery to stop charging or discharging when temperature or resistance in a battery cell reaches a specific threshold. The separator is configured to separate the positive electrode plate and the negative electrode plate. Microscale (even nanoscale) micropores attached to the separator can be automatically dissolved when temperature of the separator rises to a specific value, so that metal ions cannot pass through the separator, and an internal reaction in the battery cell is terminated.

The pressure relief mechanism is an element or a component that is actuated to relieve internal pressure or temperature when the internal pressure or temperature in the battery cell reaches a preset threshold. Magnitude of the threshold varies along with design requirements, and depends on one or more materials of the positive electrode plate, the negative electrode plate, the electrolyte, and the separator in the battery cell. The pressure relief mechanism may be in a form such as an explosion-proof valve, a gas valve, a pressure relief valve, or a safety valve, and may specifically use a pressure-sensitive or temperature-sensitive element or structure. When an internal pressure or temperature of the battery cell reaches the preset threshold, the pressure relief mechanism conducts an action or a weak structure provided in the pressure relief mechanism is destroyed and cracks to form an opening or a channel for relief of the internal pressure and temperature.

"Actuate" mentioned in this application means that the pressure relief mechanism implements an action or is activated to a specific state, so that the internal pressure and temperature of the battery cell can be relieved. The action implemented by the pressure relief mechanism may include but is not limited to, for example, cracking, breaking, tearing, or opening at least part of the pressure relief mechanism. When the pressure relief mechanism is actuated, high-pressure and high-temperature substances inside the battery cell are released from an actuated part as emissions. In this way, the battery cell can relieve its pressure and temperature under a condition of controllable pressure or temperature, thereby avoiding more serious potential accidents.

The emissions from the battery cell mentioned in this application include but are not limited to: electrolyte, fragments of positive and negative electrode plates and separator because of dissolution or breaking, high-temperature and high-pressure gas and flames generated by reactions, and the like.

The pressure relief mechanism in the battery cell has significant impact on safety of the battery. For example, when a short circuit, overcharge, or the like occurs, thermal runaway may be caused inside the battery cell to cause a sharp rise in pressure or temperature. In this case, the internal pressure and temperature may be relieved outward through actuation of the pressure relief mechanism to prevent the battery cell from exploding and catching fire.

When the battery cell operates normally, a specific air pressure inside the battery cell is applied to the pressure relief mechanism. Although the air pressure is lower than a lower limit of a designed initial actuation air pressure, under continuous action of the air pressure and the internal temperature in the battery cell, a grain boundary of the pressure relief mechanism slides, grains diffuse along the grain boundary, and finally, the pressure relief mechanism has a thinner structure, and a pressure tolerance capability of the pressure relief mechanism is decreased, which may cause failure of the pressure relief mechanism due to breakage under pressure less than the set actuation pressure.

**In** view of this, this application provides a pressure relief mechanism, where the pressure relief mechanism includes a first part with an end obliquely protruding toward an interior of a battery cell and a second part having a shape of protruding toward the interior of the battery cell. Under action of an air pressure and temperature inside the battery cell, the second part and the first part tend to move away from the interior of the battery cell. Therefore, when the air pressure or temperature inside the battery cell is relatively low and is specifically less than a first preset value, a contour of the pressure relief mechanism inside of the battery cell tends to have reduced circumference and shrink toward a center of the pressure relief mechanism, and a weak portion is pressed by the first part and/or the second part to inhibit cracking of the weak portion and prevent the pressure relief mechanism from cracking under a low air pressure, thereby effectively prolonging service life of the pressure relief mechanism.

Herein, the first preset value is defined as an air pressure or a temperature value at which the first part and/or the second part change/changes from a state of pressing the weak portion to a state of stretching the weak portion.

The technical solutions described in the embodiments of this application are applicable to various apparatuses that use batteries, such as mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are not only applicable to the devices described above, but also applicable to all devices using batteries. However, for brevity of description, the following embodiments are all described by using an electric vehicle as an example.

The following describes specific embodiments of this application in detail.

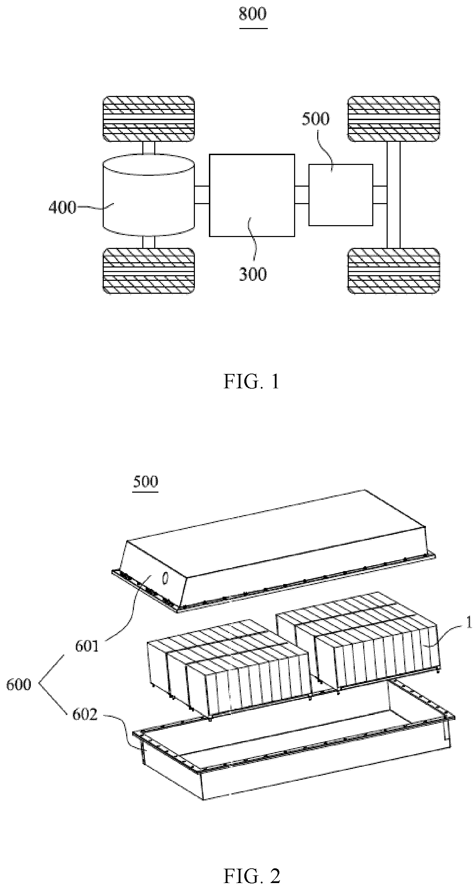

FIG. 1 is a schematic structural diagram of a vehicle 800 according to an embodiment of this application. The vehicle 800 may be an oil-fueled vehicle, a gas-powered vehicle, or a new energy vehicle. The new energy vehicle may be a battery electric vehicle, a hybrid electric vehicle, an extended-range electric vehicle, or the like. A motor 400, a controller 300, and a battery 500 may be provided inside the vehicle, and the controller 300 is configured to control the battery 500 to supply power to the motor 400. For example, the battery 500 may be provided at the bottom, the front, or the rear of the vehicle. The battery 500 may be configured to supply power to the vehicle. For example, the battery 500 may be used as an operational power supply for the vehicle, and may be applied to a circuit system of the vehicle 800, for example, may be configured to supply power to meet power usage requirements of the vehicle 800 for starting, navigating, and driving. In another embodiment of this application, the battery 500 not only can be used as the operational power supply for the vehicle 800, but also can be used as a driving power supply for the vehicle 800, to totally or partially replace the fossil fuel or the natural gas to provide driving power for the vehicle 800.

To meet different power usage requirements, the battery may include a plurality of battery cells, where the plurality of battery cells may be connected in series, in parallel, or in parallel and series, and being connected in series and parallel means a combination of series and parallel connections. The battery may also be called a battery pack. Optionally, the plurality of battery cells may be connected in series, in parallel, or in series and parallel to form a battery module first, and then a plurality of battery modules are connected in series, in parallel, or in series and parallel to form a battery. To be specific, the plurality of battery cells may directly constitute a battery, or may first constitute a battery module, and then a plurality of battery modules constitute a battery.

FIG. 2 is a schematic structural diagram of a battery 500 according to an embodiment of this application. The battery 500 may include a plurality of battery cells 1. The battery 500 may further include a box body 600 (or referred to as a cover), the box body 600 has a hollow structure, and the plurality of battery cells 1 are accommodated in the box body 600. As shown in FIG. 2, the box body 600 may include a first housing 601 and a second housing 602, and the first housing 601 and the second housing 602 are snap-fitted together. Shapes of the first housing 601 and the second housing 602 may be determined based on a shape of the plurality of combined battery cells 1, and the first housing 601 and the second housing 602 each have an opening. For example, the first housing 601 and the second housing 602 each may be a hollow cuboid and have one face with an opening, the opening of the first housing 601 is disposed opposite the opening of the second housing 602, and the first housing 601 and the second housing 602 are snap-fitted to form a box body with an enclosed chamber. After being connected in parallel, in series, or in series and parallel, the plurality of battery cells 1 are placed into the box body formed after the first housing 601 and the second housing 602 are snap-fitted.

Based on different power demands, battery cells 1 can be set in any quantity. The plurality of battery cells 1 may be connected in series, in parallel, or in series and parallel to implement large capacity or high power. Because each battery 500 may include a large quantity of battery cells 1, for ease of installation, the battery cells 1 may be disposed by group, and each group of battery cells 1 form a battery module. The quantity of battery cells 1 included in the battery module is not limited and can be set according to requirements. For example, a battery may include a plurality of battery modules, and the battery modules may be connected in series, in parallel, or in series and parallel.

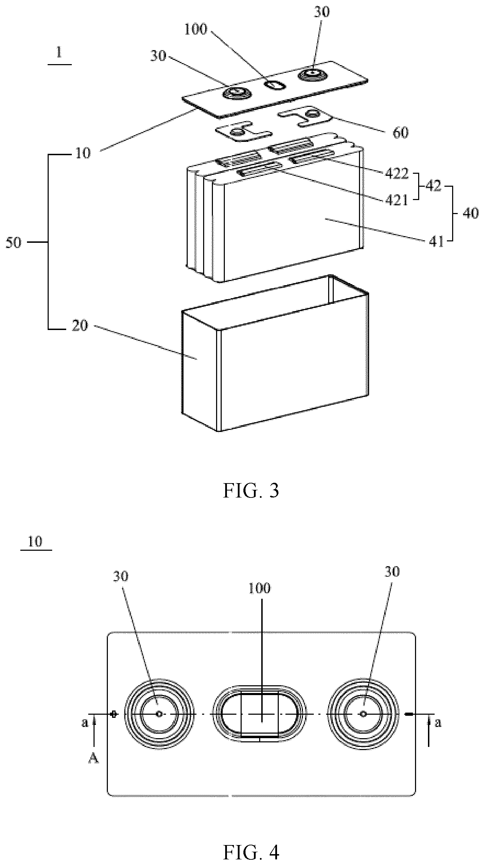

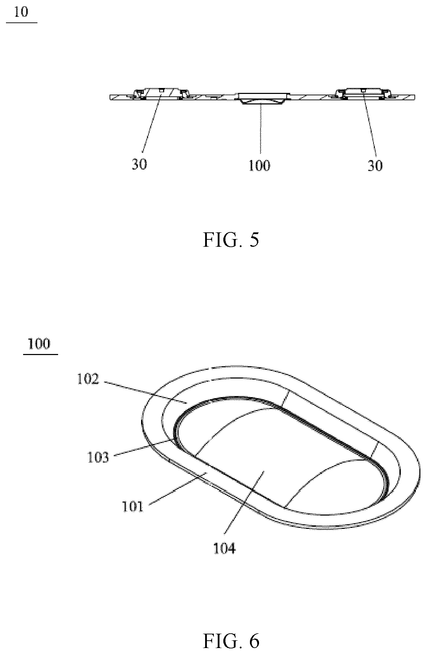

FIG. 3 is an exploded view of a battery cell 1. FIG. 4 is a top view of an end cover 10 according to some embodiments of this application. FIG. 5 is a cross-sectional view taken in a direction of an arrow A at a line a-a in FIG. 4.

As shown in FIG. 3, the battery cell 1 includes a housing plate 50 and an electrode assembly 40 provided in the housing plate 50, the housing plate 50 includes an end cover 10 and a housing 20, the housing 20 has an opening, and the electrode assembly 40 is disposed in the housing 20 through the opening of the housing 20. The electrode assembly 40 includes a body portion 41 and tabs 42, and the tabs 42 extend from the body portion 41. The body portion 41 includes a positive electrode plate, a negative electrode plate, and a separator. The body portion 41 may be a wound structure formed by winding the positive electrode plate, the separator, and the negative electrode plate, or may be a stacked structure formed by stacking the positive electrode plate, the separator, and the negative electrode plate. A positive electrode tab 421 and a negative electrode tab 422 may be located on a same side of the body portion 41, or may be located on opposite sides of the body portion 41 respectively. FIG. 3 exemplarily shows a case in which the positive electrode tab 421 and the negative electrode tab 422 are located on a same side of the body portion 41. The end cover 10 covers the opening of the housing 20 to form an enclosed space for accommodating the electrode assembly 40 and the electrolyte, and the electrolyte may be a liquid electrolyte. As shown in FIG. 3, FIG. 4, and FIG. 5, in some embodiments, the pressure relief mechanism 100 is provided in the approximately middle part of the end cover 10. However, depending on different provision methods and positions of the electrode assembly, the pressure relief mechanism 100 may alternatively be provided at another position on the housing plate 50. The end cover 10 is also provided with two electrode terminals 30. The electrode terminals 30 are configured to electrically connect to the tabs 42 to output electric energy from the battery cell 1, or configured to connect to an external power supply to charge the battery cell. The pressure relief mechanism 100 is located between the two electrode terminals 30. The battery cell 1 further includes a connecting member 60, and the electrode terminal 30 and the tab 42 are electrically connected via the connecting member 60.

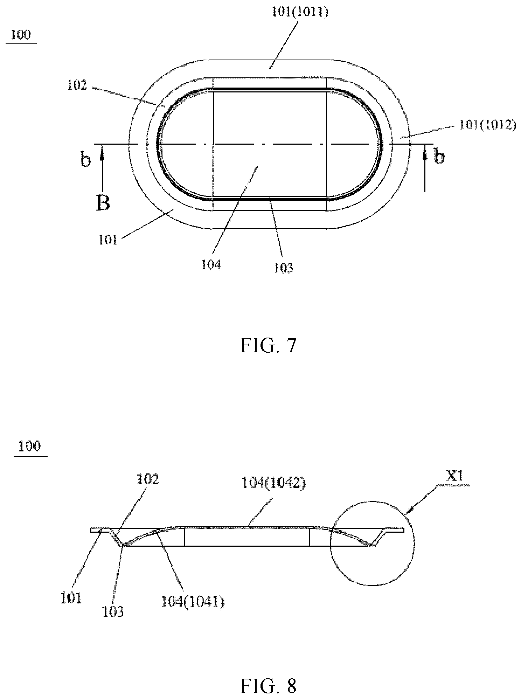

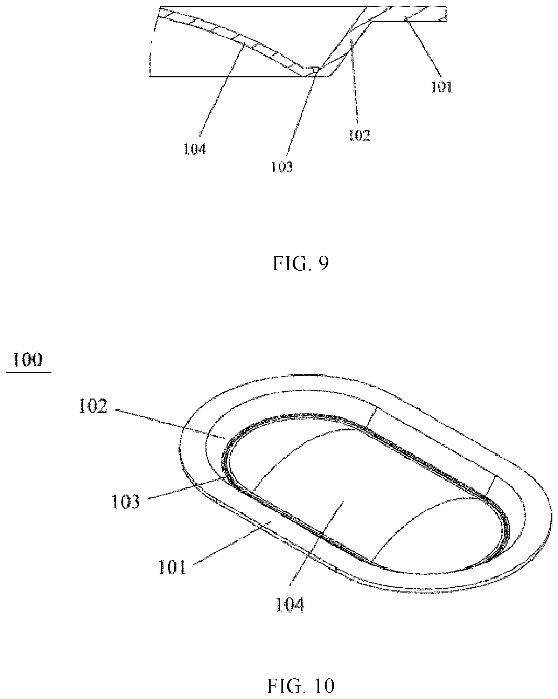

FIG. 6 is a three-dimensional diagram of a pressure relief mechanism 100 according to some embodiments of this application. FIG. 7 is a view of a side of the pressure relief mechanism 100 that faces an interior of a battery cell. FIG. 8 is a cross-sectional view taken in a direction of an arrow B at a line b-b in FIG. 7. FIG. 9 is an enlarged view of region X1 in FIG. 8.

FIG. 6 to FIG. 9 show an initial state of the pressure relief mechanism 100, that is, a state without pressure.

As shown in FIG. 6 to FIG. 9, the pressure relief mechanism 100 includes a connecting portion 101, a first part 102, a weak portion 103, and a second part 104. The connecting portion 101 is located in an outer peripheral region of the pressure relief mechanism 100 and is configured to connect to the end cover 10 in FIG. 3, FIG. 4, and FIG. 5. In an embodiment, for example, as shown in FIG. 7, the connecting portion 101 includes two straight portions 1011 and two arc-shaped portions 1012 connected to ends of the two straight portions 1011 respectively, and is in a shape of a racetrack as a whole. As shown in FIG. 9, one end of the first part 102 is connected to the connecting portion 101, and the other end protrudes obliquely toward the electrode assembly 40 inside the battery cell 1, that is, in a downward direction in FIG. 3. The weak portion 103 is connected to the protruding end of the first part 102. As shown in FIG. 6 and FIG. 8, an outer edge region 1041 of the second part 104 is connected to the weak portion 103, and the outer edge region 1041 extends obliquely in a direction leaving the interior of the battery cell 1. When an air pressure or a temperature inside the battery cell 1 is less than a first preset value, the weak portion 103 is pressed by the first part 102 and/or the second part 104.

As shown in FIG. 9, the first part 102 as a whole is closer to the interior of the battery cell 1 than the connecting portion 101. A shape of the protruding part of the first part 102 is not particularly limited. In this embodiment, as shown in FIG. 9, the first part 102 protrudes from the interior of the battery cell 1 basically in a linear direction, but the first part 102 may also protrude to form an arc shape or a curve shape.

The weak portion 103 is located between the first part 102 and the second part 104, that is, at the protruding end of the first part 102. The weak portion 103 is less in strength than the first part 102 and the second part 104, and the weak portion 103 is actuated to relieve pressure during pressure relief.

As shown in FIG. 6, FIG. 7, and FIG. 8, the second part 104 is a part with a maximum area in the pressure relief mechanism 100, is located in a middle part of the pressure relief mechanism 100, and includes an outer edge region 1041 and a middle region 1042 (refer to FIG. 8), where one end of the outer edge region 1041 is connected to the weak portion 103, the other end is connected to the middle region 1042, and the outer edge region 1041 extends obliquely in a direction leaving the interior of the battery cell 1. The second part 104 has a shape of protruding away from the interior of the battery cell 1. For example, the second part 104 forms an arch that protrudes away from the interior of the battery cell 1, but may also be in an irregular convex shape. As shown in FIG. 8, the middle region 1042 is roughly parallel to the end cover 10 on which the pressure relief mechanism 100 is provided.

Because the middle region 1042 is basically parallel to the end cover 10, the second part 104 does not deform extremely severely, so that the second part 104 is not likely to crack, thereby reducing a risk of actuation at a position outside the weak portion 103.

As shown in FIG. 8, a protruding height of the second part 104 in a direction leaving the interior of the battery cell 1 does not exceed a height of the connecting portion 101. For example, the protruding height of the second part 104 in a direction leaving the interior of the battery cell 1 is equal to the height of the connecting portion 101. That is, in FIG. 8, the middle region 1042 and the connecting portion 101 are located on a same plane. If the protruding height of the second part 104 in a direction leaving the interior of the battery cell is excessively high, a volume of the battery cell 1 is increased, causing a decrease in volumetric energy density of the battery cell 1.

FIG. 10 to FIG. 18 show states of the pressure relief mechanism 100 in this embodiment of this application under different air pressures or temperatures.

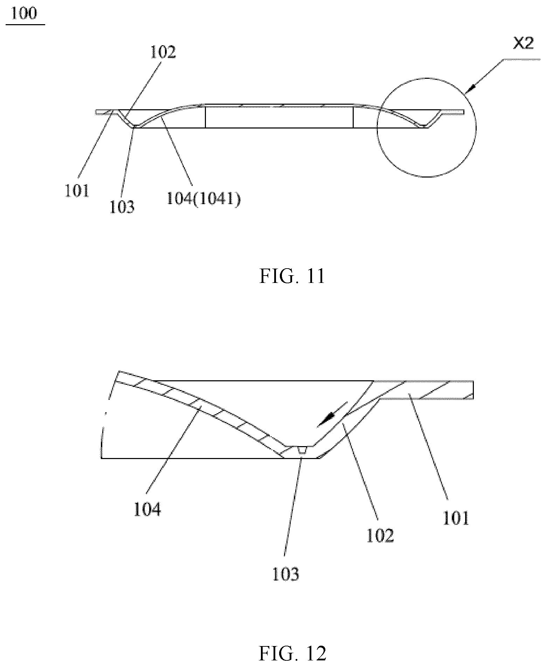

FIG. 10 is a three-dimensional diagram of a pressure relief mechanism 100 when an air pressure or a temperature inside a battery cell 1 is less than a first preset value. FIG. 11 is a cross-sectional view of a pressure relief mechanism 100, showing a same sectioning position and viewing angle as those in FIG. 8. For details, refer to description of FIG. 8. FIG. 12 is an enlarged view of region X2 in FIG. 11.

When the battery cell 1 operates normally, the air pressure or temperature inside the battery cell 1 is relatively low. The following uses the air pressure as an example. The air pressure inside the battery cell 1 continuously acts on the pressure relief mechanism 100, so that the first part 102, the weak portion 103, and the second part 104 move upward or tend to move upward, and a contour of the first part 102 tends to have reduced circumference and shrink toward the center.

Specifically, as shown in FIG. 11 and FIG. 12, because the first part 102 tilts toward an interior of the battery cell 1, a position of the weak portion 103 is closer to the interior of the battery cell than the connecting portion 101. That is, the position of the weak portion 103 is closer to the interior of the battery cell than a position of a fastening point of the pressure relief mechanism 100 and the end cover 10. In addition, because one end of the first part 102 is confined by the connecting portion 101, under action of the air pressure, the end of the first part 102 that extends toward the interior of the battery cell 1 presses the weak portion 103 in the direction of the arrow in FIG. 12 to inhibit cracking of the weak portion 103 and prevent the pressure relief mechanism 100 from creeping failure when the battery cell 1 operates normally, thereby effectively prolonging service life of the pressure relief mechanism. In addition, as shown in FIG. 12, the second part 104 supports the first part 102 and the weak portion 103 to effectively press the weak portion 103.

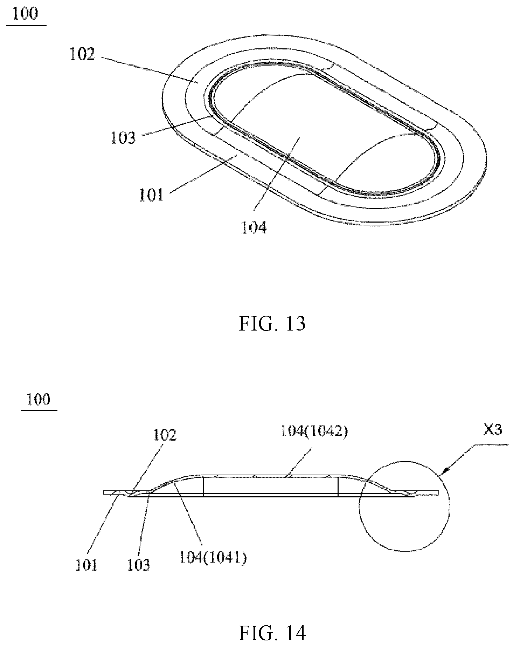

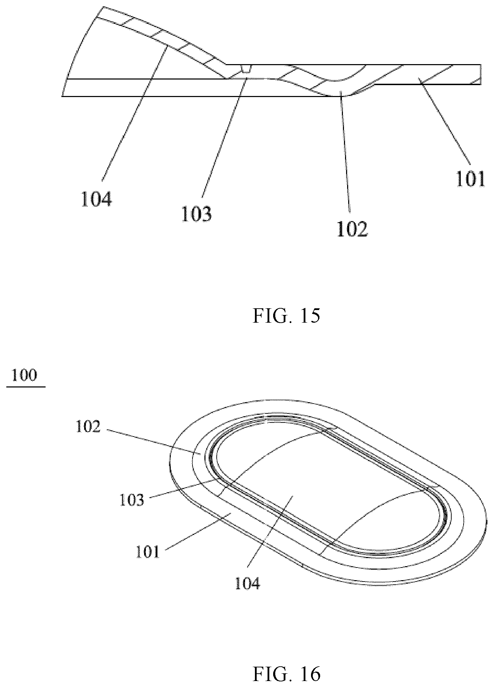

FIG. 13 is a diagram of a process in which the first part 102 is turned over upward to change from a state of protruding toward an interior of a battery cell 1 to a state of protruding away from the interior of the battery cell 1 when an air pressure or a temperature inside the battery cell 1 rises to be greater than or equal to a first preset value. FIG. 14 is a cross-sectional view of a pressure relief mechanism 100, showing a same sectioning position and viewing angle as those in FIG. 8 and FIG. 11. FIG. 15 is an enlarged view of region X3 in FIG. 14.

As shown in FIG. 13 to FIG. 15, when the air pressure or temperature inside the battery cell 1 rises to be greater than or equal to the first preset value, the first part 102, the weak portion 103, and the second part 104 continue to move upward as a whole, where the first part 102 deforms greatly, and is turned over upward to change from a state of protruding toward an interior of a battery cell 1 to a state of protruding away from the interior of the battery cell 1. More specifically, a portion of the first part 102 adjacent to the weak portion 103 changes to a state of protruding away from the interior of the battery cell 1, and a portion of the first part 102 adjacent to the connecting portion 101 is confined by the connecting portion 101 and moves less. After the first part 102 is turned over, the entire first part 102 basically changes to a state of protruding away from the interior of the battery cell 1, and the first part 102 changes from a state of pressing the weak portion 103 shown in FIG. 12 to a state of stretching the weak portion 103 to promote cracking of the weak portion 103 and help achieve rapid pressure relief. In addition, the second part 104 moves upward under an action of the air pressure and also stretches the weak portion 103 to promote cracking of the weak portion 103 and help achieve rapid pressure relief.

Herein, a second preset value is defined to represent a preset temperature or pressure value of the pressure relief mechanism 100 for pressure relief. That is, when the temperature or pressure value inside the battery cell 1 reaches the second preset value, the pressure relief mechanism 100 is actuated. For example, the weak portion 103 cracks to relieve the pressure inside the battery cell 1 by the pressure relief mechanism 100.

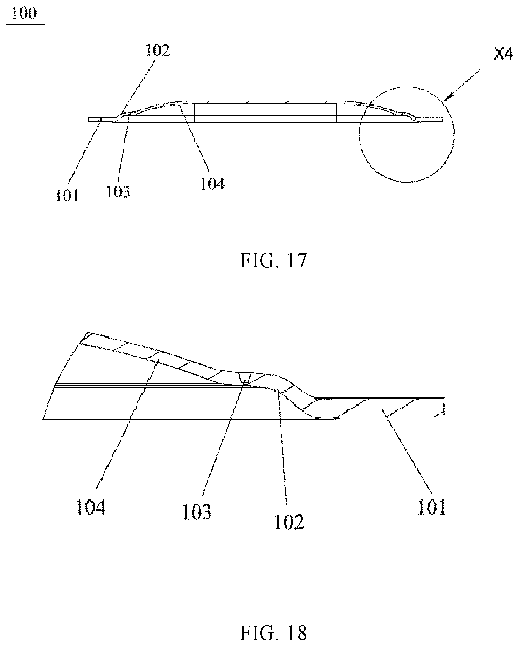

FIG. 16 is a three-dimensional diagram when an air pressure or a temperature inside a battery cell 1 rises to be greater than or equal to a second preset value, and a pressure relief mechanism 100 is about to break. FIG. 17 is a cross-sectional view of a pressure relief mechanism 100, showing a same sectioning position and viewing angle as those in FIG. 8, FIG. 11, and FIG. 14. FIG. 18 is an enlarged view of region X4 in FIG. 17.

As shown in FIG. 16 to FIG. 18, when the air pressure or temperature inside the battery cell 1 reaches the second preset value, the first part 102, the weak portion 103, and the second part 104 continue to move upward and swell as a whole to apply greater stretching force onto the weak portion 103 and cause the weak portion 103 to break to relieve the pressure inside the battery cell 1.

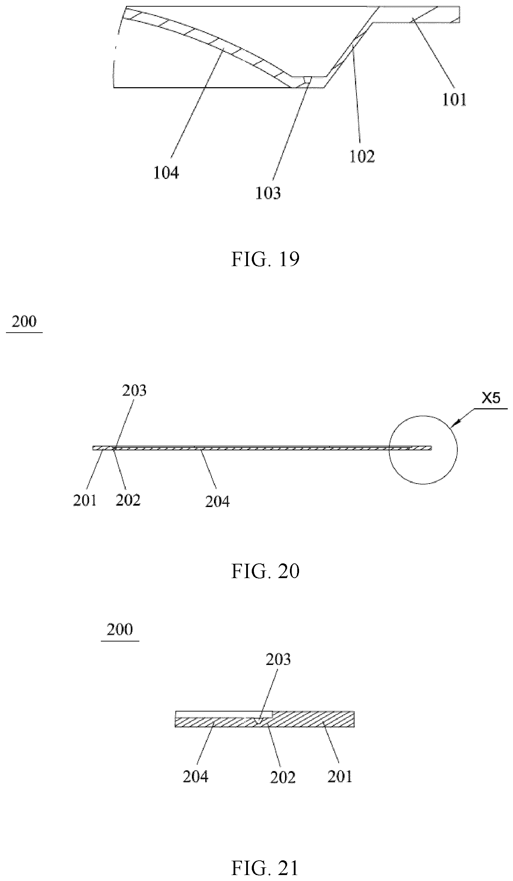

FIG. 19 shows a variant of the pressure relief mechanism 100 in FIG. 9.

As shown in FIG. 19, in some embodiments, a thickness of the first part 102 is less than or equal to a thickness of the second part 104.

Because the first part 102 is thinner and the second part 104 is thicker, when the air pressure or temperature inside the battery cell 1 increases, the thinner first part 102 is more easily and quickly to change to a state of protruding away from the interior of the battery cell 1 and deform greatly, and the thicker second part 104 deforms slightly to support the weak portion 103 and the first part 102, so that the first part 102 stretches the weak portion 103 more effectively, thereby promoting cracking of the weak portion 103 to achieve rapid pressure relief, effectively preventing the battery from exploding.

The following comparative example illustrates a pressure relief mechanism in the prior art.

FIG. 20 is a cross-sectional view of a pressure relief mechanism in the prior art, showing a same sectioning position and viewing angle as those in FIG. 8. FIG. 21 is an enlarged view of region X5 in FIG. 20.

FIG. 20 and FIG. 21 show an initial state of the pressure relief mechanism 200, that is, a state without pressure.

As shown in FIG. 20 and FIG. 21, the pressure relief mechanism 200 in the prior art includes a connecting portion 201, a first part 202, a weak portion 203, and a second part 204. A contour shape of the pressure relief mechanism 200 is set to be basically the same as that of the pressure relief mechanism 100 in this application. As shown in FIG. 20, the first part 202, the second part 204, and the connecting portion 201 are located on a same plane, the first part 202 of the pressure relief mechanism 200 does not protrude toward an interior of a battery cell, and the second part 204 does not have a shape of extending away from the interior of the battery cell 1.

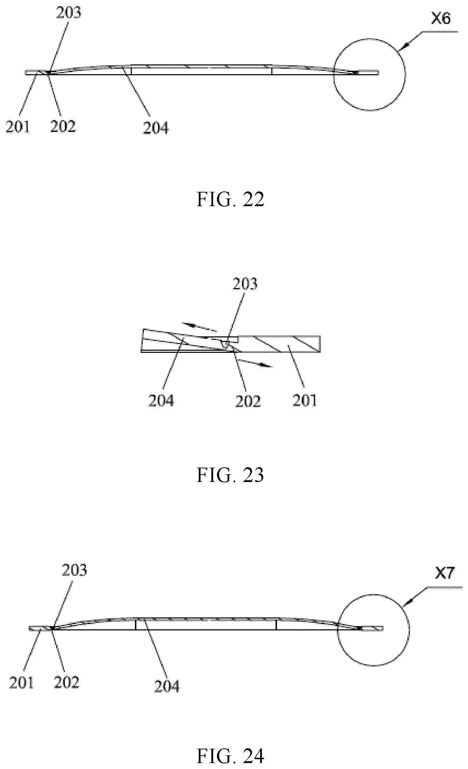

FIG. 22 shows a state of the pressure relief mechanism 200 in the prior art under a lower air pressure (a sectioning position and viewing angle are the same as those in FIG. 20). FIG. 23 is an enlarged view of region X6 in FIG. 22.

The pressure relief mechanism 200 is affected by the air pressure inside the battery cell when the battery cell operates normally. In this case, the first part 202 and the second part 204 move in a direction leaving the interior of the battery cell, and under continuous action of the air pressure inside the battery cell, the first part 202 and the second part 204 continuously stretch the weak portion 203 in the direction of the arrow in FIG. 23, so that the weak portion 203 may crack under the action of the relatively low air pressure when the battery cell operates normally.

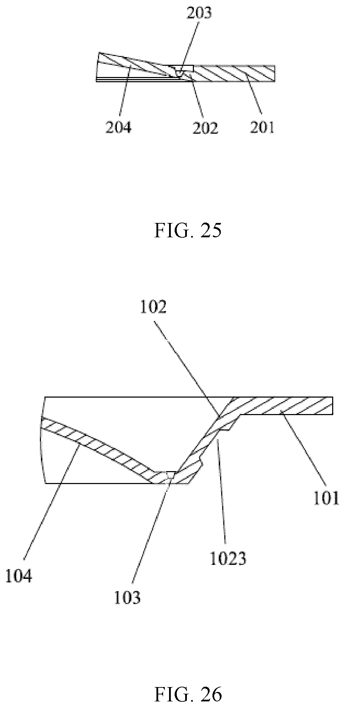

FIG. 24 shows a cracked state of a pressure relief mechanism in the prior art (a sectioning position and viewing angle are the same as those in FIG. 20). FIG. 25 is an enlarged view of region X7 in FIG. 24.

The pressure relief mechanism 200 is subjected to the air pressure inside the battery cell for a long time, and the first part 202 and the second part 204 continue to move upward. Because creeping occurs on the weak portion 203 when being continuously stretched by the first part 202 and the second part 204, cracking is caused for the weak portion 203 when the battery cell operates normally to implement creeping failure.

FIG. 26 is a partially enlarged view of a cross-sectional view of a pressure relief mechanism according to another embodiment of this application (a sectioning position and viewing angle are the same as those in FIG. 8).

As shown in FIG. 26, the first part 102 is provided with a thin-walled region 1023, and a thickness of the thin-walled region 1023 is less than a thickness of another region in the first part 102. In some embodiments, the thin-walled region 1023 is an annular groove with an opening facing the interior of the battery cell 1.

When the pressure relief mechanism 100 has a relatively small size, the first part 102 needs to be set thin enough to ensure that the first part 102 changes to a state of protruding away from the interior of the battery cell 1 when an air pressure or a temperature is greater than or equal to the first preset value to promote cracking of the weak portion 103 and implementing a same pressure relief effect as a large-sized pressure relief mechanism. However, due to limitation of a manufacturing device and a manufacturing process, it is difficult to prepare the first part 102 to be thin enough. Therefore, the thin-walled region 1023 may be provided in the first part 102, so that the first part 102 is likely to deform under the action of the air pressure and change to a state of protruding away from the interior of the battery cell 1.

The thin-walled region 1023 in this application is not limited to the foregoing structure, and may also be an annular groove with an opening facing away from the interior of the battery cell 1, or the annular groove may be provided on each of upper and lower surfaces of the first part 102. In addition, the thin-walled region 1023 is not limited to a particular shape, and may not be annular, but is arc-shaped, linear, or in another shape. To ensure uniform application of pressure, thin-walled regions 1023 are preferably provided symmetrically on the first part 102. In addition, the number of thin-walled regions 1023 is not particularly limited and may be properly set as needed.

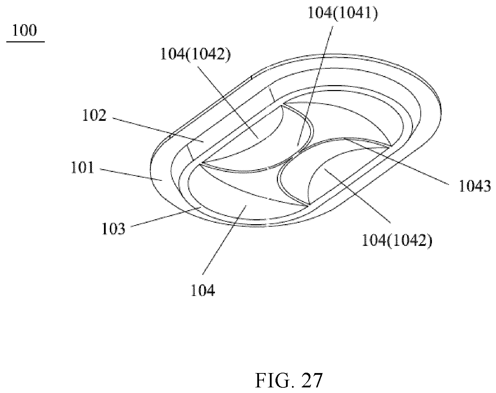

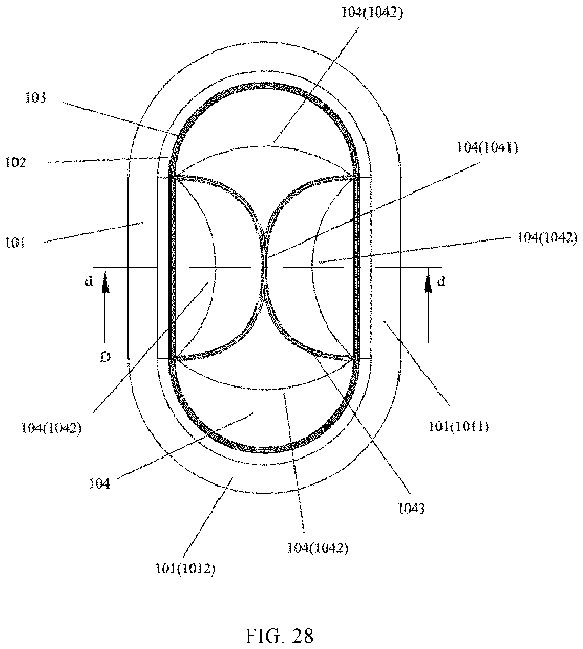

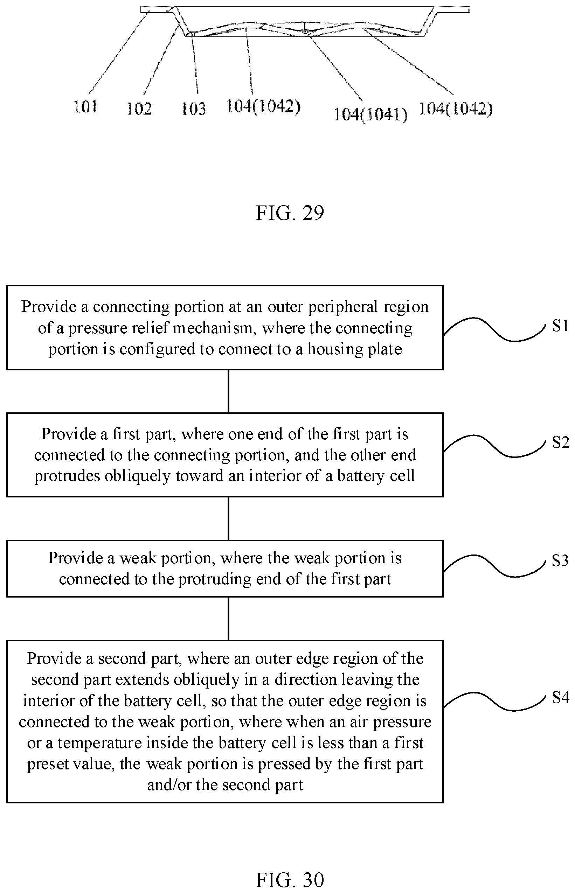

FIG. 27 is a three-dimensional diagram of a side of a pressure relief mechanism 100 that faces an interior of the battery cell 1 according to another embodiment of this application. FIG. 28 is a view indicating that the pressure relief mechanism 100 in FIG. 27 faces away from the interior of the battery cell 1. FIG. 29 is a cross-sectional view taken in a direction of an arrow D at a line d-d in FIG. 28.

In some embodiments, as shown in FIG. 27 to FIG. 29, the second part 104 includes at least one first protrusion region 1041 that protrudes toward the interior of the battery cell 1, and at least two second protrusion regions 1042 that protrude away from the interior of the battery cell 1. As shown in FIG. 29, the two second protrusion regions 1042 are both connected to the weak portion 103, the first protrusion region 1041 is located between the two second protrusion regions 1042, and the second part 104 is wave-shaped as a whole to increase strength of the second part 104 and implement a better supporting effect on the first part 102 and the weak portion 103, so that a pressing effect of the first part 102 on the weak portion 103 can be improved when the air pressure or temperature is less than the first preset value to inhibit cracking of the weak portion 103 and prolonging service life of the pressure relief mechanism 100. For example, the second part 104 of the pressure relief mechanism 100 shown in FIG. 6 to FIG. 8 is punched to form an "X-shaped" bending portion 1043 shown in FIG. 27 and FIG. 28, form the first protrusion region 1041 protruding toward the interior of the battery cell 1, and form two second protrusion regions 1042 that are located on two sides of the first protrusion region 1041 and that protrude away from the interior of the battery cell 1.

The first protrusion region 1041 and the second protrusion region 1042 may alternatively be formed in other methods. For example, a shape of a mold is set to directly forge the second part 104 having the first protrusion region 1041 and the second protrusion region 1042.

Numbers of the first protrusion regions 1041 and the second protrusion regions 1042 and shapes thereof are not particularly limited. Provided that at least one first protrusion region 1041 protruding toward the interior of the battery cell 1 and at least two second protrusion regions 1042 protruding away from the interior of the battery cell 1 form the second part 104 that is basically wave-shaped, an effect of increasing strength of the second part 104 can be achieved.

In some embodiments, as shown in FIG. 28, the connecting portion 101 is an annular plate-shaped structure and can be connected to the end cover 10 by, for example, welding. A welding position may be outside the end cover 10; and when the first part 102 extends beyond a thickness of the end cover, the welding position may alternatively be inside the end cover 10. The connecting portion 101 includes two straight portions 1011 and two arc-shaped portions 1012 connected to ends of the two straight portions 1011 respectively. The two straight portions 1011 are basically parallel to each other, and the connecting portion 101 formed by the two straight portions 1011 and the two arc-shaped portions 1012 is in a shape of an annular racetrack as a whole.

Compared with a common circular rupture disk, the connecting portion 101 in this embodiment is in a shape of an annular racetrack. For the pressure relief mechanism 100 with the same length and width, a degassing area during pressure relief is larger, and gas can be released more rapidly.

In some embodiments, a manner of providing the pressure relief mechanism 100 on the end cover 10 is as follows: as shown in FIG. 4, the pressure relief mechanism 100 is located between the two electrode terminals 30, and compared with the straight portions, the two arc-shaped portions are close to the electrode terminals 30 on two sides of the pressure relief mechanism 100 respectively. More specifically, a connection line between midpoints of the two arc-shaped portions 1012 and a connection line between the two electrode terminals 30 are on a same line. For example, the connection line between midpoints of the two arc-shaped portions 1012 and the connection line between the two electrode terminals 30 are both on a section line a-a shown in FIG. 4. In this way, compared with another provision direction, deformation of the pressure relief mechanism 100 is the maximum under stress. Certainly, as shown in FIG. 3, the pressure relief mechanism 100 may also be provided in a manner in which the straight portions are closer to the electrode terminals 30.

In some embodiments, a thickness of at least a partial region of the weak portion 103 is less than thicknesses of the first part 102 and the second part 104. That is, a thickness of a part of the weak portion 103 is less than the thicknesses of the first part 102 and the second part 104, and a thickness of another portion may be equal to or even greater than the thicknesses of the first part 102 and/or the second part 104.

Because the thickness of the part of the weak portion 103 is not reduced, when the weak portion 103 cracks, the second part 104 does not fly out along with emissions such as airflow.

In some embodiments, the weak portion 103 is a groove structure. For example, the weak portion 103 is an annular groove with an opening on one side that faces away from the interior of the battery cell 1. The annular groove structure may include a plurality of discontinuous grooves, that is, satisfying that a thickness of a partial region of the weak portion 103 is less than thicknesses of the first part 102 and the second part 104.

Because the weak portion 103 has a groove structure, and the thickness and strength of the weak portion 103 are less than those of the first part 102 and the second part 104, the weak portion 103 is likely to crack.

However, the weak portion 103 is not limited to the groove structure, and a structure may be used as long as the structure satisfies that the strength of the weak portion 103 is far less than that of the first part 102 and the second part 104. For example, the weak portion 103 may have a structure with decreased strength obtained after the weak portion 103 is softened through a chemical treatment.

The foregoing describes the pressure relief mechanism 100 in the embodiments of this application.

According to another aspect of this application, a battery 500 is further provided, including the foregoing battery cell 1.

According to still another aspect of this application, an electric apparatus is further provided, including the foregoing battery 500 for supplying electrical energy. Optionally, the electric apparatus may be the vehicle 800 shown in FIG. 1, or may be a ship or a spacecraft.

This application further provides a manufacturing method of pressure relief mechanism.

FIG. 30 is a flowchart of a manufacturing method of pressure relief mechanism 100 according to an embodiment of this application.

As shown in FIG. 30, the manufacturing method in this embodiment includes the following steps:
Step S1: Provide a connecting portion 101 at an outer peripheral region of the pressure relief mechanism 100, where the connecting portion is configured to connect to a housing plate.
Step S2: Provide a first part 102, where one end of the first part 102 is connected to the connecting portion 101, and the other end protrudes obliquely toward an interior of a battery cell.
Step S3: Provide a weak portion 103, where the weak portion 103 is connected to the protruding end of the first part 102.
Step S4: Provide a second part 104, where an outer edge region of the second part 104 extends obliquely in a direction leaving the interior of the battery cell 1, so that the outer edge region is connected to the weak portion 103, where when an air pressure or a temperature inside the battery cell is less than a first preset value, the weak portion 103 is pressed by the first part 102 and/or the second part 104.

More specifically, the connecting portion 101, the first part 102, and the second part 104 are integrated through a mold by using a metal material, and a connecting platform parallel to the connecting portion 101 is formed between the first part 102 and the second part 104. The metal material is, for example, aluminum foil or copper foil. In this case, a groove-shaped weak portion 103 is formed on the connecting platform in a manner such as punching or cutting to obtain the pressure relief mechanism 100 shown in FIG. 6. An appropriate material is selected, and parameters such as a thickness of the first part 102, a protruding length of the first part 102, an area of the second part 104, a thickness of the second part 104, and a thickness of the weak portion 103 are set to implement a pressing effect of the first part 102 and the second part 104 on the weak portion 103 when the air pressure or temperature inside the battery cell is less than the first preset value. Specific parameters are appropriately set based on a size of the pressure relief mechanism and the like. Details are not described in this application.

In a preferred embodiment, the second part 104 is configured to have a shape of protruding away from the interior of the battery cell 1. For example, this can be implemented by adjusting a shape of the forming mold.

In a preferred embodiment, a thickness of the first part 102 is set to be less than or equal to a thickness of the second part 104. For example, this can be implemented by adjusting a shape of the forming mold.

In a preferred embodiment, the first part 102 is provided with the thin-walled region 1023 shown in FIG. 26 to facilitate deformation of the first part 102. The thin-walled region 1023 may be formed by punching or cutting the first part 102, or may be integrally formed with the first part 102 by setting the shape of the mold.

In a preferred embodiment, the second part 104 is configured to include at least one first protrusion region 1041 that protrudes toward the interior of the battery cell 1, and at least two second protrusion regions 1042 that protrude away from the interior of the battery cell 1. The first protrusion region 1041 and the second protrusion region 1042 may be formed naturally by providing an "X-shaped" groove on the second part 104 by punching, or may be integrally formed with the second part 104 by setting the shape of the mold.

It should be noted that the foregoing embodiments are merely intended to describe the technical solutions of this application but not for limiting this application.

## Claims

1. A battery cell (1) comprising a pressure relief mechanism (100) provided on a housing plate (50) of the battery cell (1), the pressure relief mechanism (100) comprising:
a connecting portion (101), wherein the connecting portion (101) is located at an outer peripheral region of the pressure relief mechanism (100) and connected to the housing plate (50);
a first part (102), wherein one end of the first part (102) is connected to the connecting portion (101), and the other end protrudes obliquely toward an interior of the battery cell (1);
a weak portion (103), wherein the weak portion (103) is provided at the protruding end of the first part (102); and
a second part (104), wherein an outer edge region of the second part (104) is connected to the weak portion (103), and the outer edge region extends obliquely in a direction leaving the interior of the battery cell (1), wherein
when an air pressure inside the battery cell (1) is less than a first preset value, the weak portion (103) is pressed by the first part (102) and/or the second part (104),
**characterized in that** a thickness of the first part (102) is less than a thickness of the second part (104) and/or the first part (102) is provided with a thin-walled region (1023).

2. The battery cell (1) according to claim 1, wherein
when the air pressure inside the battery cell (1) is greater than or equal to the first preset value, the first part (102) changes from a state of protruding toward the interior of the battery cell (1) to a state of protruding away from the interior of the battery cell (1), and the weak portion (103) is stretched by the first part (102) and/or the second part (104).

3. The battery cell (1) according to claim 1 or 2, wherein the second part (104) has a shape of protruding away from the interior of the battery cell (1); optionally the second part (104) comprises an outer edge region and a middle region, and the middle region is basically parallel to a portion of the housing plate (50) on which the pressure relief mechanism (100) is provided; and further optionally a protruding height of the second part (104) in a direction leaving the interior of the battery cell (1) does not exceed a height of the connecting portion (101).

4. The battery cell (1) according to any one of claims 1 to 3, wherein when a temperature or an air pressure inside the battery cell (1) is greater than or equal to a second preset value, the weak portion (103) is actuated, so that the pressure inside the battery cell (1) is relieved via the pressure relief mechanism (100).

5. The battery cell (1) according to any one of claims 1 to 4, wherein the second part (104) comprises at least one first protrusion region (1041) that protrudes toward the interior of the battery cell (1) and at least two second protrusion regions (1042) that protrude away from the interior of the battery cell (1); and further optionally the connecting portion (101) is annular and comprises two straight portions (1011) and two arc-shaped portions (1012) connected to ends of the two straight portions (1011) respectively.

6. The battery cell (1) according to any one of claims 1 to 5, wherein at least a partial region of the weak portion (103) has a thickness less than thicknesses of the first part (102) and the second part (104); optionally the weak portion (103) is a groove.

7. A battery (500), comprising the battery cell (1) according to any one of the preceding claims.

8. An electric apparatus, comprising the battery (500) according to claim 7, wherein the battery (500) is configured to supply electrical energy.

9. A manufacturing method of pressure relief mechanism (100), **characterized by** comprising:
providing (S1) a connecting portion (101) at an outer peripheral region of the pressure relief mechanism (100), wherein the connecting portion (101) is configured to connect to the housing plate (50);
providing (S2) a first part (102), wherein one end of the first part (102) is connected to the connecting portion (101), and the other end protrudes obliquely toward an interior of a battery cell (1);
providing (S3) a weak portion (103), wherein the weak portion (103) is connected to the protruding end of the first part (102); and
providing (S4) a second part (104), wherein an outer edge region of the second part (104) is connected to the weak portion (103), so that the outer edge region extends obliquely in a direction leaving the interior of the battery cell (1), wherein
when an air pressure inside the battery cell (1) is less than a first preset value, the weak portion (103) is pressed by the first part (102) and/or the second part (104);
**characterized in that** a thickness of the first part (102) is configured to be less than a thickness of the second part (104) and/or the first part (102) is provided with a thin-walled region (1023) to facilitate deformation of the first part (102).

10. The manufacturing method according to claim 9, wherein the second part (104) is configured to have a shape of protruding away from the interior of the battery cell (1).

11. The manufacturing method according to any one of claims 9 or 10, wherein the second part (104) is configured to comprise at least one first protrusion region (1041) that protrudes toward the interior of the battery cell (1) and at least two second protrusion regions (1042) that protrude away from the interior of the battery cell (1).

## Patentansprüche

1. Batteriezelle (1), umfassend einen Druckentlastungsmechanismus (100), der an einer Gehäuseplatte (50) der Batteriezelle (1) bereitgestellt ist, wobei der Druckentlastungsmechanismus (100) Folgendes umfasst:
einen Verbindungsabschnitt (101), wobei der Verbindungsabschnitt (101) sich an einem äußeren Umfangsbereich des Druckentlastungsmechanismus (100) befindet und mit der Gehäuseplatte (50) verbunden ist;
einen ersten Teil (102), wobei ein Ende des ersten Teils (102) mit dem Verbindungsabschnitt (101) verbunden ist und das andere Ende schräg in Richtung eines Innenraums der Batteriezelle (1) vorsteht;
einen schwachen Abschnitt (103), wobei der schwache Abschnitt (103) an dem vorstehenden Ende des ersten Teils (102) bereitgestellt ist; und
einen zweiten Teil (104), wobei ein äußerer Randbereich des zweiten Teils (104) mit dem schwachen Abschnitt (103) verbunden ist und der äußere Randbereich sich schräg in eine Richtung erstreckt, die den Innenraum der Batteriezelle (1) verlässt, wobei
wenn ein Luftdruck im Inneren der Batteriezelle (1) kleiner als ein erster voreingestellter Wert ist, der schwache Abschnitt (103) durch den ersten Teil (102) und/oder den zweiten Teil (104) gedrückt wird,
**dadurch gekennzeichnet, dass** eine Dicke des ersten Teils (102) geringer als eine Dicke des zweiten Teils (104) ist und/oder der erste Teil (102) mit einem dünnwandigen Bereich (1023) bereitgestellt ist.

2. Batteriezelle (1) nach Anspruch 1, wobei
wenn der Luftdruck im Inneren der Batteriezelle (1) größer oder gleich dem ersten voreingestellten Wert ist, der erste Teil (102) von einem Zustand, in dem er zum Innenraum der Batteriezelle (1) vorsteht, in einen Zustand wechselt, in dem er von dem Innenraum der Batteriezelle (1) wegsteht, und der schwache Abschnitt (103) durch den ersten Teil (102) und/oder den zweiten Teil (104) gedehnt wird.

3. Batteriezelle (1) nach Anspruch 1 oder 2, wobei der zweite Teil (104) eine Form aufweist, die von dem Innenraum der Batteriezelle (1) wegsteht; optional der zweite Teil (104) einen äußeren Randbereich und einen Mittelbereich umfasst und der Mittelbereich im Wesentlichen parallel zu einem Abschnitt der Gehäuseplatte (50) verläuft, auf dem der Druckentlastungsmechanismus (100) bereitgestellt ist; und optional eine Vorsprungshöhe des zweiten Teils (104) in einer Richtung, die den Innenraum der Batteriezelle (1) verlässt, nicht eine Höhe des Verbindungsabschnitts (101) überschreitet.

4. Batteriezelle (1) nach einem der Ansprüche 1 bis 3, wobei, wenn eine Temperatur oder ein Luftdruck innerhalb der Batteriezelle (1) größer oder gleich einem zweiten voreingestellten Wert ist, der schwache Abschnitt (103) betätigt wird, so dass der Druck innerhalb der Batteriezelle (1) über den Druckentlastungsmechanismus (100) entlastet wird.

5. Batteriezelle (1) nach einem der Ansprüche 1 bis 4, wobei der zweite Teil (104) mindestens einen ersten Vorsprungsbereich (1041) umfasst, der in Richtung des Innenraums der Batteriezelle (1) vorsteht, und mindestens zwei zweite Vorsprungsbereiche (1042) umfasst, die von dem Innenraum der Batteriezelle (1) wegstehen; und wobei ferner optional der Verbindungsabschnitt (101) ringförmig ist und zwei gerade Abschnitte (1011) und zwei bogenförmige Abschnitte (1012) umfasst, die jeweils mit den Enden der zwei geraden Abschnitte (1011) verbunden sind.

6. Batteriezelle (1) nach einem der Ansprüche 1 bis 5, wobei mindestens ein Teilbereich des schwachen Abschnitts (103) eine geringere Dicke als die Dicken des ersten Teils (102) und des zweiten Teils (104) aufweist; optional der schwache Abschnitt (103) eine Nut ist.

7. Batterie (500), umfassend die Batteriezelle (1) nach einem der vorhergehenden Ansprüche.

8. Elektrische Vorrichtung, umfassend die Batterie (500) nach Anspruch 7, wobei die Batterie (500) so konfiguriert ist, dass sie elektrische Energie zuführt.

9. Verfahren zur Herstellung eines Druckentlastungsmechanismus (100), **dadurch gekennzeichnet, dass** es Folgendes umfasst:
Bereitstellen (S1) eines Verbindungsabschnitts (101) an einem äußeren Umfangsbereich des Druckentlastungsmechanismus (100), wobei der Verbindungsabschnitt (101) so konfiguriert ist, dass er mit der Gehäuseplatte (50) verbunden ist;
Bereitstellen (S2) eines ersten Teils (102), wobei ein Ende des ersten Teils (102) mit dem Verbindungsabschnitt (101) verbunden ist und das andere Ende schräg in Richtung eines Innenraums einer Batteriezelle (1) vorsteht;
Bereitstellen (S3) eines schwachen Abschnitts (103), wobei der schwache Abschnitt (103) mit dem vorstehenden Ende des ersten Teils (102) verbunden ist; und
Bereitstellen (S4) eines zweiten Teils (104), wobei ein äußerer Randbereich des zweiten Teils (104) mit dem schwachen Abschnitt (103) verbunden ist, so dass der äußere Randbereich sich schräg in eine Richtung erstreckt, die den Innenraum der Batteriezelle (1) verlässt, wobei
wenn ein Luftdruck im Inneren der Batteriezelle (1) kleiner als ein erster voreingestellter Wert ist, der schwache Abschnitt (103) durch den ersten Teil (102) und/oder den zweiten Teil (104) gedrückt wird;
**dadurch gekennzeichnet, dass** eine Dicke des ersten Teils (102) so konfiguriert ist, dass sie geringer als eine Dicke des zweiten Teils (104) ist und/oder der erste Teil (102) mit einem dünnwandigen Bereich (1023) bereitgestellt ist, um die Verformung des ersten Teils (102) zu erleichtern.

10. Herstellungsverfahren nach Anspruch 9, wobei der zweite Teil (104) so konfiguriert ist, dass er eine Form aufweist, die von dem Innenraum der Batteriezelle (1) wegsteht.

11. Herstellungsverfahren nach einem der Ansprüche 9 oder 10, wobei das zweite Teil (104) so konfiguriert ist, dass es mindestens einen ersten Vorsprungsbereich (1041) umfasst, der zu dem Innenraum der Batteriezelle (1) vorsteht, und mindestens zwei zweite Vorsprungsbereiche (1042) umfasst, die von dem Innenraum der Batteriezelle (1) wegstehen.

## Revendications

1. Elément de batterie (1) comprenant un mécanisme de détente de pression (100) prévu sur une plaque de boîtier (50) de l'élément de batterie (1), le mécanisme de détente de pression (100) comprenant :
une partie de raccordement (101), dans lequel la partie de raccordement (101) est située sur une région périphérique extérieure du mécanisme de détente de pression (100) et est raccordée à la plaque de boîtier (50) ;
une première partie (102), dans lequel une extrémité de la première partie (102) est raccordée à la partie de raccordement (101), et l'autre extrémité fait saillie obliquement vers un intérieur de l'élément de batterie (1) ;
une partie faible (103), dans lequel la partie faible (103) est prévue sur l'extrémité faisant saillie de la première partie (102) ; et
une deuxième partie (104), dans lequel une région de bord extérieur de la deuxième partie (104) est raccordée à la partie faible (103), et la région de bord extérieur s'étend obliquement dans une direction quittant l'intérieur de l'élément de batterie (1), dans lequel
lorsqu'une pression d'air à l'intérieur de l'élément de batterie (1) est inférieure à une première valeur prédéfinie, la partie faible (103) est pressée par la première partie (102) et/ou la deuxième partie (104),
**caractérisé en ce qu'**une épaisseur de la première partie (102) est inférieure à une épaisseur de la deuxième partie (104) et/ou la première partie (102) est prévue avec une région à paroi mince (1023).

2. Elément de batterie (1) selon la revendication 1, dans lequel
lorsque la pression d'air à l'intérieur de l'élément de batterie (1) est supérieure ou égale à la première valeur prédéfinie, la première partie (102) passe d'un état faisant saillie vers l'intérieur de l'élément de batterie (1) à un état faisant saillie à l'écart de l'intérieur de l'élément de batterie (1), et la partie faible (103) est étirée par la première partie (102) et/ou la deuxième partie (104).

3. Elément de batterie (1) selon la revendication 1 ou 2, dans lequel la deuxième partie (104) présente une forme faisant saillie à l'écart de l'intérieur de l'élément de batterie (1) ; en option, la deuxième partie (104) comprend une région de bord extérieur et une région centrale, et la région centrale est fondamentalement parallèle à une partie de la plaque de boîtier (50) sur laquelle le mécanisme de détente de pression (100) est prévu ; et en outre, en option, une hauteur faisant saillie de la deuxième partie (104) dans une direction quittant l'intérieur de l'élément de batterie (1) ne dépasse pas une hauteur de la partie de raccordement (101).

4. Elément de batterie (1) selon l'une quelconque des revendications 1 à 3, dans lequel lorsqu'une température ou une pression de l'air à l'intérieur de l'élément de batterie (1) est supérieure ou égale à une deuxième valeur prédéfinie, la partie faible (103) est actionnée, de telle sorte que la pression à l'intérieur de l'élément de batterie (1) est détendue par l'intermédiaire du mécanisme de détente de pression (100).

5. Elément de batterie (1) selon l'une quelconque des revendications 1 à 4, dans lequel la deuxième partie (104) comprend au moins une première région faisant saillie (1041) qui fait saillie vers l'intérieur de l'élément de batterie (1) et au moins deux deuxièmes régions faisant saillie (1042) qui font saillie à l'écart de l'intérieur de l'élément de batterie (1) ; et en outre, en option, la partie de raccordement (101) est annulaire et comprend deux parties droites (1011) et deux parties en forme d'arc (1012) raccordées à des extrémités des deux parties droites (1011) respectivement.

6. Elément de batterie (1) selon l'une quelconque des revendications 1 à 5, dans lequel au moins une région partielle de la partie faible (103) présente une épaisseur inférieure à des épaisseurs de la première partie (102) et de la deuxième partie (104) ; en option, la partie faible (103) est une rainure.

7. Batterie (500), comprenant l'élément de batterie (1) selon l'une quelconque des revendications précédentes.

8. Appareil électrique, comprenant la batterie (500) selon la revendication 7, dans lequel la batterie (500) est configurée pour fournir de l'énergie électrique.

9. Procédé de fabrication d'un mécanisme de détente de pression (100), **caractérisé en ce qu'**il comprend :
la fourniture (E1) d'une partie de raccordement (101) sur une région périphérique extérieure du mécanisme de détente de pression (100), dans lequel la partie de raccordement (101) est configurée pour se raccorder à la plaque de boîtier (50) ;
la fourniture (E2) d'une première partie (102), dans lequel une extrémité de la première partie (102) est raccordée à la partie de raccordement (101), et l'autre extrémité fait saillie obliquement vers un intérieur d'un élément de batterie (1) ;
la fourniture (E3) d'une partie faible (103), dans lequel la partie faible (103) est raccordée à l'extrémité faisant saillie de la première partie (102) ; et
la fourniture (E4) d'une deuxième partie (104), dans lequel une région de bord extérieur de la deuxième partie (104) est raccordée à la partie faible (103), de telle sorte que la région de bord extérieur s'étend obliquement dans une direction quittant l'intérieur de l'élément de batterie (1), dans lequel
lorsqu'une pression d'air à l'intérieur de l'élément de batterie (1) est inférieure à une première valeur prédéfinie, la partie faible (103) est pressée par la première partie (102) et/ou la deuxième partie (104) ;
**caractérisé en ce qu'**une épaisseur de la première partie (102) est configurée pour être inférieure à une épaisseur de la deuxième partie (104) et/ou la première partie (102) est prévue avec une région à paroi mince (1023) pour faciliter la déformation de la première partie (102).

10. Procédé de fabrication selon la revendication 9, dans lequel la deuxième partie (104) est configurée pour présenter une forme de saillie à l'écart de l'intérieur de l'élément de batterie (1).

11. Procédé de fabrication selon l'une quelconque des revendications 9 ou 10, dans lequel la deuxième partie (104) est configurée pour comprendre au moins une première région faisant saillie (1041) qui fait saillie vers l'intérieur de l'élément de batterie (1) et au moins deux deuxièmes régions faisant saillie (1042) qui font saillie à l'écart de l'intérieur de l'élément de batterie (1).
